# EUROPEAN PATENT APPLICATION

(11) **EP 2 463 572 A1**
(43) Date of publication of application: **13.06.2012**
(21) Application number: 10806271.2
(22) Date of filing: 29.03.2010
(51) Int. Cl.: F21S 2/00, F21V 17/00, G02F 1/13357, F21Y 101/02

(54) **ILLUMINATION DEVICE, DISPLAY DEVICE, AND TELEVISION RECEIVING DEVICE**

(30) Priority: 07.08.2009 JP 2009184283
(71) Applicant: Sharp Kabushiki Kaisha, Osaka-shi, Osaka 545-8522 (JP)
(72) Inventor: IKUTA, Kaori, Osaka-shi, Osaka 545-8522 (JP)
(74) Representative: Müller-Boré & Partner Patentanwälte
(86) International application number: PCT/JP2010/055527
(87) International publication number: WO 2011/016271

(57) **Abstract**

Provided is an illumination device wherein the occurrence of noise can be suppressed while the occurrence of uneven brightness is suppressed. The illumination device is comprised of a back chassis (5) in which a light emitting module (6) is contained, a diffusion plate (8), and a supporting member (10). The supporting member (10) has a pair of end portions, and contains a linear element (10a) papered toward the diffusion plate (8). The pair of end portions of the linear element (10a) are attached to the back chassis (5), and the top portion of the linear element (10a) supports the diffusion plate (8).

## Description

### Technical Field

The present invention relates to an illumination device, a display device and a television receiving device.

### Background Art

Conventionally, a liquid crystal display device is known, which uses a liquid crystal display panel that is a non-light emitting display panel as a display device that defines a display portion of a television receiving device (e.g., see a patent document 1).

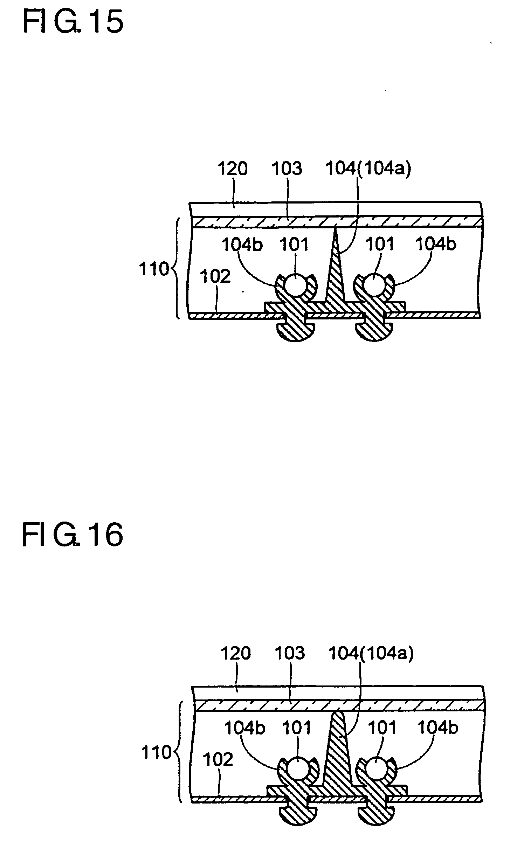

In the conventional liquid crystal display device, the liquid crystal display panel is the non-light emitting type; accordingly, an illumination device is disposed to face a rear surface (opposite to a display surface of the liquid crystal display panel) of the liquid crystal panel, whereby a display operation is performed by illuminating the liquid crystal display panel by means of the illumination device. Here, conventionally, the illumination device for the liquid crystal display device is called a backlight unit and roughly classified into a direct type and an edge light type. Hereinafter, with reference to Fig. 15, a structure of a conventional direct type of backlight unit is simply described. Here, Fix. 15 shows an enlarged schematic view of a portion of the conventional liquid crystal display device (the direct type of backlight unit).

In the conventional direct type of backlight unit 110, as shown in Fig. 15, a cold-cathode tube 101 is used as a light source; the cold-cathode tube 101 is housed in a back chassis 102 that is provided with an opening which faces a liquid crystal display panel 120. Besides, the opening of the back chassis 102 facing the liquid crystal display panel 120 is closed by a diffusion plate 103, whereby light from the cold-cathode tube 101 is diffused.

Besides, the back chassis 102 is provided with a support member 104 that supports the diffusion plate 103 for the cold-cathode tube 101 side. A support portion (a portion that actually supports the diffusion plate 103) 104a of the support member 104 is composed of a pillar body and is formed to be slenderer toward the diffusion plate 103. Here, the support member 104, in addition to the support portion 104a, has a grasp portion 104b as well that grasps the cold-cathode tube 101. In other words, the cold-cathode tube 101 housed in the back chassis 102 is held by the grasp portion 104b of the support member 104.

In the meantime, conventionally, to alleviate a shadow of the support portion 104a of the support member 104 being casted onto the diffusion plate 103, a tip end portion of the support portion 104a is sharpened and slenderized, and the diffusion plate 103 is supported by the sharpened tip end portion. Here, if such measure is not taken, the shadow of the support portion 104a of the support member 104 is casted onto the diffusion plate 103, which causes occurrence of uneven brightness.

### Citation List

### Patent Literature

PLT1: JP-A-2006-286341

### Summary of Invention

### Technical Problem

However, in the case where the support member 104 is formed to take the shape shown in Fig.15, rigidity of the support portion 104a becomes low, so that if the diffusion plate 103 warps thanks to thermal expansion, the support portion 104a is pushed by the diffusion plate 103 to be bent. Because of this, there is a disadvantage that the support portion 104a of the support member 104 and the diffusion plate 103 rub against each other and noise occurs.

As a method for solving the disadvantage, a method is conceivable, in which as shown in Fig. 16, the tip end portion of the support portion 104a of the support member 104 is rounded to thicken the support portion 104a, whereby the rigidity of the support portion 104a increases. However, in the case where the support member 104 shown in Fig. 16 is used, the shadow of the support portion 104a becomes easy to be casted onto the diffusion plate 103, whereby uneven brightness occurs.

The present invention has been made to solve the above problems, and it is an object of the present invention to provide an illumination device, a display device and a television receiving device that are capable of curbing the occurrence of noise while curbing the occurrence of uneven brightness.

### Solution to Problem

To achieve the above object, an illumination device according to a first aspect of the present invention includes: a light emitting module; a hosing member in which the light emitting module is housed; an optical member that is disposed to cover the light emitting module and diffuses light emitted from the light emitting module; and a support member that is disposed in the housing member and supports the optical member from the light emitting module side. And, the support member includes a linear body that has a pair of end portions and is formed to protrude toward the optical member when disposed in the housing member; and each of the pair of end portions of the linear body is attached to the housing member, and a top portion of the linear body facing the optical member supports the optical member.

In the illumination device according to the first aspect, the optical member is supported by means of the above support member. According to this, even if a support portion of the support member actually supporting the optical member, that is, the linear body is slenderized to alleviate a shadow of the support portion (linear body) being casted onto the optical member, each of the pair of end portions of the support portion (linear body) is attached to the housing member; accordingly, it is possible to alleviate rigidity of the support portion (linear body) becoming low. In other words, it is possible to alleviate the shadow of the support portion (linear body) being casted onto the optical member while alleviating the rigidity of the support portion (linear body) of the support member becoming low. Because of this, it becomes possible to alleviate, at the same time, both of: occurrence of uneven brightness caused by the shadow of the support portion (linear body) of the support member being casted onto the optical member; and occurrence of noise caused by low rigidity of the support portion (linear body) of the support member.

Besides, in the illumination device according to the above first aspect, it is preferable that the top portion of the linear body facing the optical member supports the optical member at one point. According to this structure, a contact portion between the linear body and the optical member becomes very small, so that it is possible to more alleviate the shadow of the linear body being casted onto the optical member.

Besides, in the illumination device according to the above first aspect, it is preferable that the top portion of the linear body facing the optical member is rounded. According to this structure, it is possible to make the linear body and the optical member come into contact with each other at one point. Because of this, it is possible to easily alleviate more the shadow of the linear body being casted onto the optical member.

Besides, in the illumination device according to the above first aspect, it is preferable that a shape of the optical member when viewed from top is rectangular and when viewed from top, the linear body is parallel to a longitudinal direction of the optical member. According to this structure, it is possible to increase the rigidity of the linear body against force that acts from the optical member side.

Besides, in the illumination device according to the above first aspect, it is preferable that an attachment piece attachable to the hosing member is disposed on the support member; and the attachment piece is disposed on the pair of end portions of the linear body. According to this structure, it is possible to easily attach each of the pair of end portions of the linear body to the housing member.

In the structure in which the attachment piece is disposed on the support member, it is preferable that the light emitting module includes a light emitting element and a mount board on which the light emitting element is mounted, and the mount board is fastened to the housing member by a fastening member to be housed in the housing member; and the attachment piece has also a function of the fastening member, and at least a portion of the fastening of the mount board to the housing member is performed by using the attachment piece. According to this structure, it is possible to reduce the number of the utilized fastening members for fixing the light emitting module.

Besides, in the above illumination device according to the above first aspect, it is preferable that the linear body is composed of a material capable of reflecting light. According to this structure, the light from the light emitting module becomes unlikely to be absorbed by the linear body, so that the light entering the optical member increases and light use efficiency improves.

In this case, it is preferable that the material capable of reflecting light is a resin that contains a highly reflective material. According to this structure, it is possible to easily increase light reflectivity of a surface of the linear body. Here, as the resin that contains the highly reflective material, there are polycarbonate resins that contain titanium oxide, barium sulfate and the like.

Besides, a display device according to a second aspect of the present invention includes the illumination device according to the above first aspect and a display panel that is illuminated by the illumination device. According to this structure, it is possible to obtain a display device that is capable of alleviating the occurrence of noise while alleviating the occurrence of uneven brightness.

Besides, a television receiving device according to a third aspect of the present invention includes the above display device according to the second aspect. According to this structure, it is possible to obtain a television receiving device that is capable of alleviating the occurrence of noise while alleviating the occurrence of uneven brightness.

### Advantageous Effects of Invention

As described above, according to the present invention, it is possible to easily obtain an illumination device, a display device and a television receiving device that are capable of curbing the occurrence of noise while curbing the occurrence of uneven brightness.

### Brief Description of Drawings

[Fig. 1] is an exploded perspective view of a liquid crystal display device according to an embodiment of the present invention.
[Fig. 2] is an enlarged sectional view of a portion (a peripheral portion of a light emitting module) of a backlight unit that is disposed in a liquid crystal display device according to an embodiment of the present invention.
[Fig. 3] is a graph showing a way of how illuminance (unit: Lux) of an LED having a diffusion lens and an LED not-having a diffusion lens differs depending on emission directions of the LEDs.
[Fig. 4] is an enlarged sectional view of a portion (a peripheral portion of a support member) of a backlight unit that is disposed in a liquid crystal display device according to an embodiment of the present invention.
[Fig. 5] is a view of the support member shown in Fig. 4.
[Fig. 6] is a view (a sectional view along a line A-A' in Fig. 5) for describing a sectional shape of a linear body of the support member shown in Fig. 5.
[Fig. 7] is a view for describing a disposition position, when viewed from top, of the support member shown in Fig. 5.
[Fig. 8] is a view for describing a variation of a disposition position of a support member.
[Fig. 9] is a view for describing a variation of a disposition position of a support member.
[Fig. 10] is a view for describing a variation of a disposition position of a support member.
[Fig. 11] is an exploded perspective view of a television receiving device in which a liquid crystal display device according to an embodiment of the present invention is disposed.
[Fig. 12] is a view showing a variation of a support member.
[Fig. 13] is a view showing a variation of a support member.
[Fig. 14] is a view of a support member that is used in a liquid crystal display device according to a variation of the present invention.
[Fig. 15] is an enlarged schematic view of a portion of a conventional liquid crystal display device (backlight unit).
[Fig. 16] is an enlarged schematic view of a portion of a conventional liquid crystal display device (backlight unit).

### Description of Embodiments

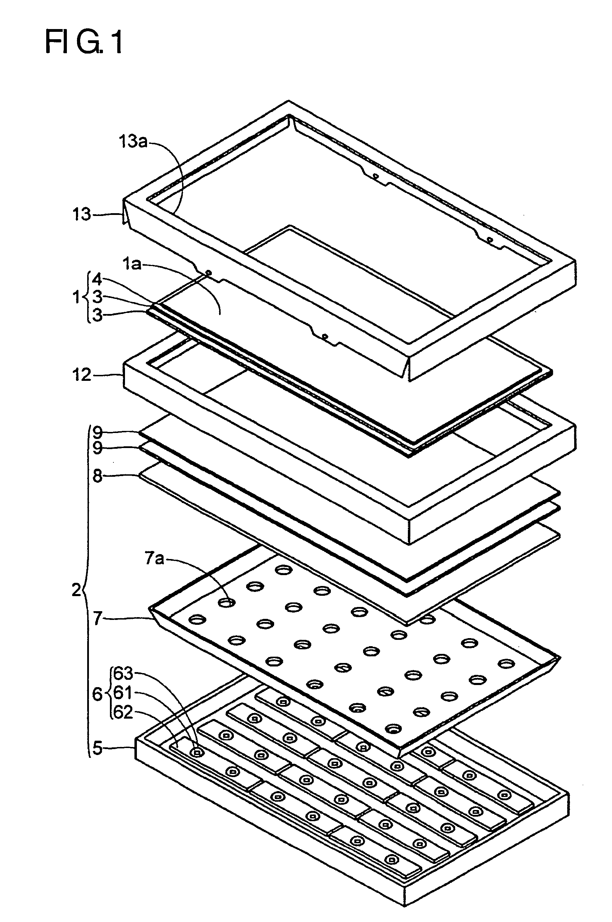

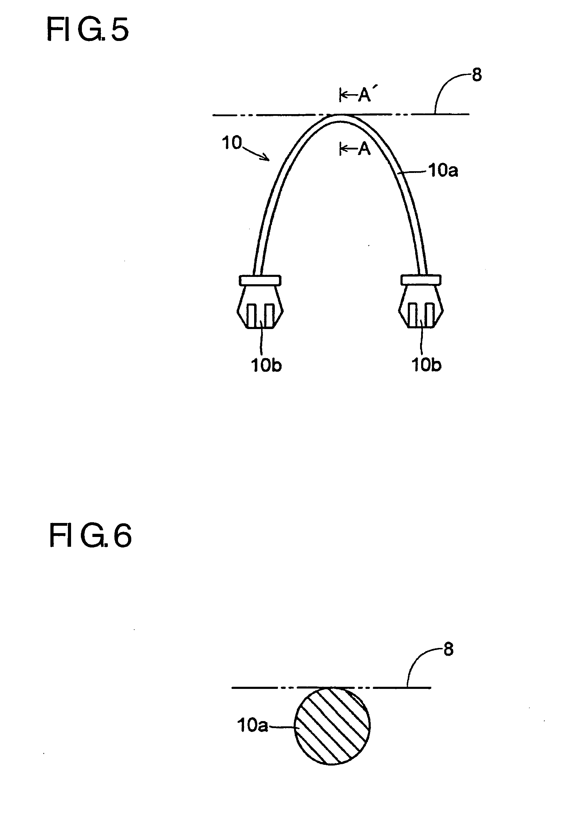

Hereinafter, with reference to Fig. 1 to Fig. 7, a structure of a display device according to an embodiment is described.

This display device is a liquid crystal display device and as shown in Fig. 1, includes: a liquid crystal display panel 1 that has a display surface 1a; a direct type of backlight unit 2 that is disposed to face a rear surface (a surface opposite to the display surface 1a) of the liquid crystal display device 1 and the like. Here, the liquid crystal display panel 1 is an example of a "display panel" of the present invention, and the backlight unit 2 is an example of an "illumination device" of the present invention.

The liquid crystal display panel 1 includes at least: a liquid crystal layer (not shown); a pair of glass boards 3; and a light polarization plate 4. The pair of glass boards 3 are attached with a seal member (not shown) interposed; and the liquid crystal layer is sandwiched between them. Besides, the light polarization plate 4 is disposed on each of surfaces of the pair of glass boards 3 opposite to the liquid crystal layer. Here, Fig. 1 shows the light polarization plate 4 only that is situated to face the display surface 1a of the liquid crystal display panel 1.

Besides, the backlight unit 2 includes at least: a back chassis 5; a light emitting module 6; a reflection sheet 7; a diffusion plate 8; and an optical sheet 9. Here, the back chassis 5 is an example of a "housing member" of the present invention, and the diffusion plate 8 is an example of an "optical member" of the present invention.

The back chassis 5 is a component that is obtained by deforming a metal plate member and is formed into a substantially box shape in which a side facing the liquid crystal display panel 1 is opened. In other words, the back chassis 5 has: a bottom portion; and a side portion that is disposed vertically on an outer circumference of the bottom portion. Besides, a region enclosed by the side portion of the back chassis 5 is substantially rectangular, and the substantially rectangular region is used as a housing region.

The light emitting module 6 generates illumination light (light for illuminating the liquid crystal display panel 1), a plurality of the light emitting modules 6 are housed in the housing region of the back chassis 5, and are arranged in a line in a long direction and a short direction spaced away from one another by a predetermined interval. Besides, although not shown, the light emitting modules 6 neighboring in the long direction of the back chassis 5 are electrically connected to one another by a connector and the like. And, the light emitting module 6 is situated right under (a region that faces the rear surface of the liquid crystal display panel 1) the liquid crystal display panel 1 when the backlight unit 2 is situated to face the rear surface of the liquid crystal display panel 1.

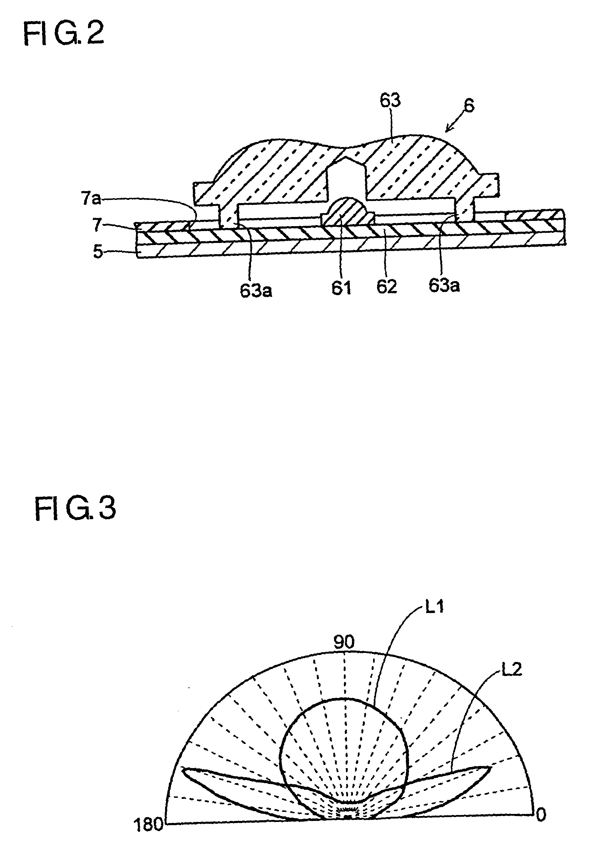

Besides, the light emitting module 6, as shown in Fig. 1 and Fig. 2, has at least: an LED (light emitting diode) 61 as a light emitting element; and a mount board 62 whose mount surface is formed to be substantially rectangular. And, a predetermined number of the LEDs 61 are mounted on the mount surface of the mount board 62 to be a module. Besides, although described in detail later, the mount board 62 is attached to the bottom portion of the back chassis 5, whereby the light emitting module 6 is fixed.

Here, the number of the light emitting modules 6 housed in the back chassis 5 is not especially limited, and is changeable in accordance with applications. Further, also the number of the LEDs 61 mounted on the mount surface of one mount board 62 is not especially limited. For example, the number of the LEDs 61 mounted on the mount surface of one mount board 62 may differ from the number of the LEDs 61 mounted on the mount surface of another mount board 62.

Besides, the light emitting module 6 has a diffusion lens 63 as well for diffusing the light from the LED 61. This diffusion lens 63 is allocated by one to one LED 61 and covers a light emitting surface of the LED 61. According to this, even if the number of the utilized LEDs 61 is reduced, it is possible to evenly spread the light from the LED 61 throughout a substantially entire region of an effective light emitting area.

In the meantime, when the LED 61 is not covered by the diffusion lens 63, illuminance reaches a peak at an optical-axis angle of 90° , and as the angle goes away from there, the illuminace rapidly drops (see L1 in Fig. 3). On the other hand, when the LED 61 is covered by the diffusion lens 63, a region where more than a predetermined illuminance is securable spreads, and it becomes possible to set the illuminance peak to an angle different from the optical axis(see L2 in Fig. 3).

Further, a plurality of pillar-shaped leg portions 63a are formed integrally with the diffusion lens 63. And, the diffusion lens 63 is fixed by attaching the leg portion 63a to the mount surface of the mount board 62. When the diffusion lens 63 is fixed by such fixing method, a gap is formed between the mount board 62 and the diffusion lens 63. Because of this, an air flow occurs between the mount board 62 and the diffusion lens 63, whereby the LED 61 is cooled.

The reflection sheet 7 is composed of a deformed resin sheet member, and has: a bottom portion that is provided with a plurality of hole portions 7a; and a side portion that is vertically formed on an outer circumference of the bottom portion. And, the reflection sheet 7, together with the light emitting module 6, is housed in the housing region of the back chassis 5 such that the diffusion lens 63 (LED 61) protrudes via the hole portion 7a. In other words, the bottom surface of the back chassis 5 and the mount surface of the mount board 62 are covered by the bottom portion of the reflection sheet 7, and an inner side surface of the back chassis 5 is covered by the side portion of the reflection sheet 7. By disposing such reflection sheet 7, light reflection is performed by the reflection sheet 7 and light traveling to the liquid crystal display panel 1 increases, so that light use efficiency improves.

Besides, as shown in Fig. 1, the diffusion plate 8 is composed of a resin plate-shaped member that is formed to be substantially rectangular, and closes the opening of the back chassis 5 that faces the liquid crystal display panel 1. In other words, the light emitting module 6 is covered by the diffusion plate 8. According to this, the light from the light emitting module 6 is diffused by the diffusion plate 8, thereafter, shines onto the liquid crystal display panel 1.

The optical sheet 9 is composed of a resin sheet-shaped member thinner than the diffusion plate 8 and is disposed on the side of the diffusion plate 8 that faces the liquid crystal display panel 1. And, the optical sheet 9 performs diffusion, collection and the like of the light that passes through the diffusion plate 8. Here, the kind of the optical sheet 9 utilized here is changeable in accordance with applications.

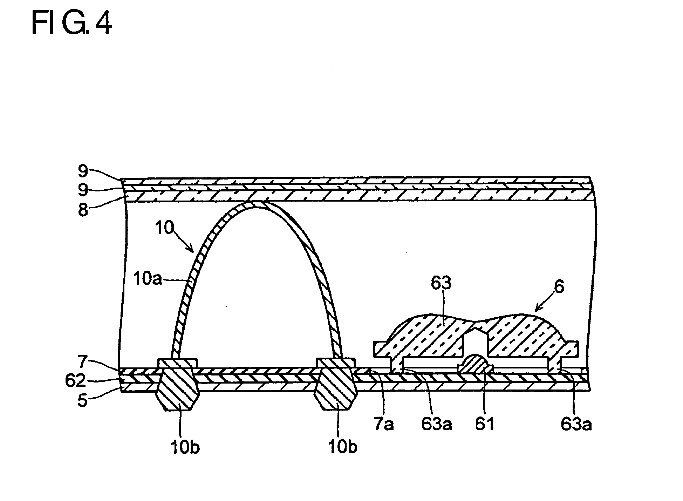

Here, in the present embodiment, a support member 10 shown in Fig. 4 to Fig. 6 is mounted on the bottom portion of the back chassis 5, and the diffusion plate 8 is supported by the support member 10 from the light emitting module 6 side. Here, for a clear drawing, Fig. 1 does not show the support member 10.

Describing specifically, the support member 10 in the present embodiment has a linear body 10a, which is composed of a highly reflective polycarbonate resin (a polycarbonate resin that contains a light reflection material such as titanium oxide or the like), as a support portion (a portion that actually supports the diffusion plate 8). The linear body 10a, which functions as the support portion of the support member 10, has a pair of end portions and is formed so as to protrude toward the diffusion plate 8 when mounted on the bottom portion of the back chassis 5. And, the diffusion plate 8 is supported by a top portion, which faces the diffusion plate 8, of the linear body 10a of the support member 10.

Besides, the top portion, facing the diffusion plate 8, of the linear body 10a of the support member 10 is rounded and the sectional shape is circular (diameter: about 1.75 mm or smaller). Because of this, in the state where the diffusion plate 8 is supported by the support member 10, the top portion of the linear body 10a facing the diffusion plate 8 comes into point contact with the diffusion plate 8. In other words, the diffusion plate 8 is supported by the top portion, which faces the diffusion plate 8, of the linear body 10a of the support member 10 at one point. Here, the sectional shape of the linear body 10a of the support member 10 may not be circular.

Further, an engagement piece 10b is formed integrally with each of the pair of end portions of the linear body 10a of the support member 10. And, the attachment of the support member 10 onto the bottom portion of the back chassis 5 is performed by engaging the engagement piece (the pair of end portions of the linear body 10a) with the bottom portion of the back chassis 5. Here, the engagement piece 10b is an example of an "attachment piece" of the present invention.

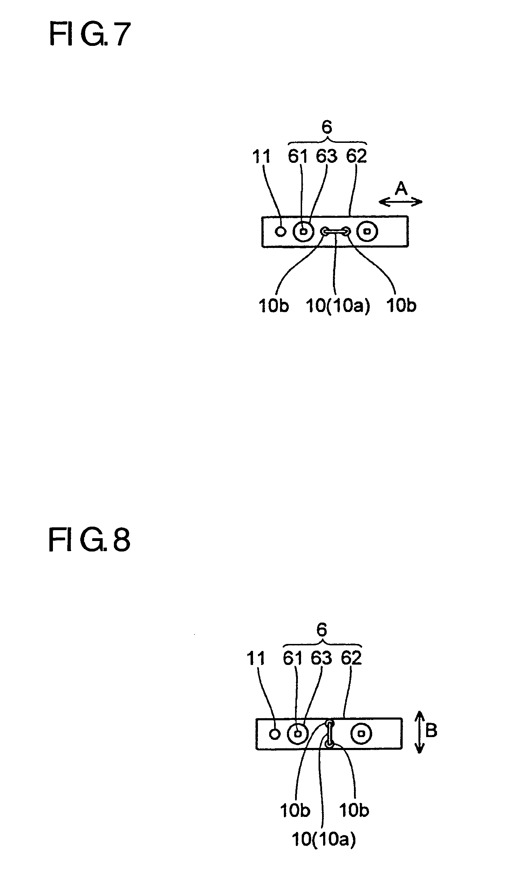

Besides, the support member 10, as shown in Fig. 7, is disposed such that when viewed from top, the linear body 10a is in parallel with an A direction, that is, a long direction of the diffusion plate 8 (see Fig. 1), and completely lies on the mount board 62. And, although not shown, a plurality of the support members 10 are arranged with a good balance such that at least a central region of the diffusion plate 8 is supported.

Here, the disposition example of the support member 10 shown in Fig. 7 is an example, and the disposition position of the support member 10 may be changed in accordance with applications. For example, as shown in Fig. 8, the support member 10 may be disposed such that when viewed from top, the linear body 10a is in parallel with a B direction, that is, a short direction of the diffusion plate 8 (see Fig. 1).

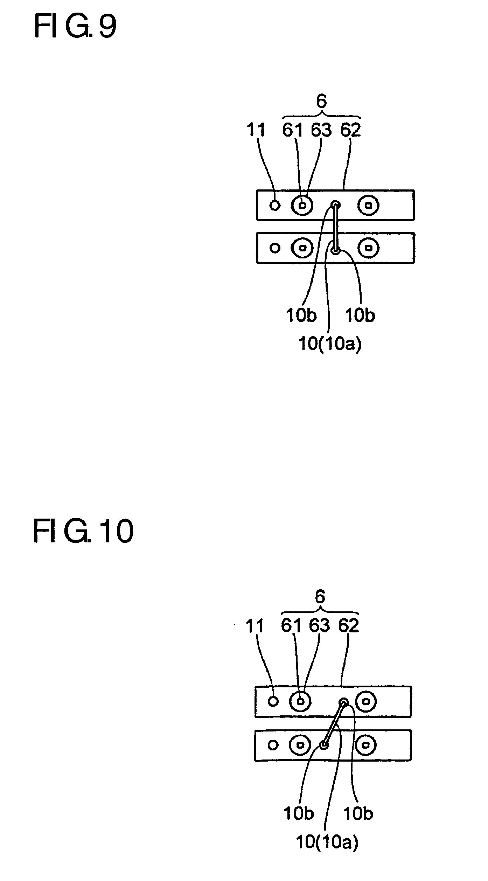

Besides, as shown in Fig. 9, the support member 10 may be disposed such that when viewed from top, the linear body 10a straddles over neighboring mount boards 62; or as shown in Fig. 10, the support member 10 may be disposed such that when viewed from top, the linear body 10a obliquely inclines.

In the meantime, the attachment (fastening) of the mount board 62 onto the bottom portion of the back chassis 5 (see Fig. 1) is performed usually by using a rivet (fastening member) 11 that is independently prepared; however, in the present embodiment, the engagement piece 10b of the support member 10 also functions as a fastening member. In other words, as the fastening members for fastening the bottom portion of the back chassis 5 and the mount board 62 to each other, the rivet 11 and the engagement piece 10b of the support member 10 are used together. Here, when the bottom portion of the back chassis 5 and the mount board 62 are fastened to each other by means of the engagement piece 10b of the support member 10, the sectional structure is as shown in Fig. 4.

In the present embodiment, the backlight unit 2 having such structure is disposed in the liquid crystal display device.

Besides, as shown in Fig. 1, a resin frame 12 formed to be rectangular is disposed between the liquid crystal display panel 1 and the backlight unit 2. And, an outer edge of the optical sheet 9 is pushed down by an edge portion of the frame 12, whereby a lamination body composed of the diffusion plate 8 and the optical sheet 9 stacked in this order is held.

Besides, a metal bezel 13, which forms a housing member together with the back chassis 5, is disposed to face the display surface 1a of the liquid crystal display panel 1. This bezel 13 has: a ceiling portion through which an opening 13a is formed; and a side portion that is disposed vertically on an outer circumference of the ceiling portion; and, the side portion is attached to the side portion of the back chassis 5 so as to be fixed. Besides, the display surface 1a of the liquid crystal display panel 1 is exposed from the opening 13a of the bezel 13.

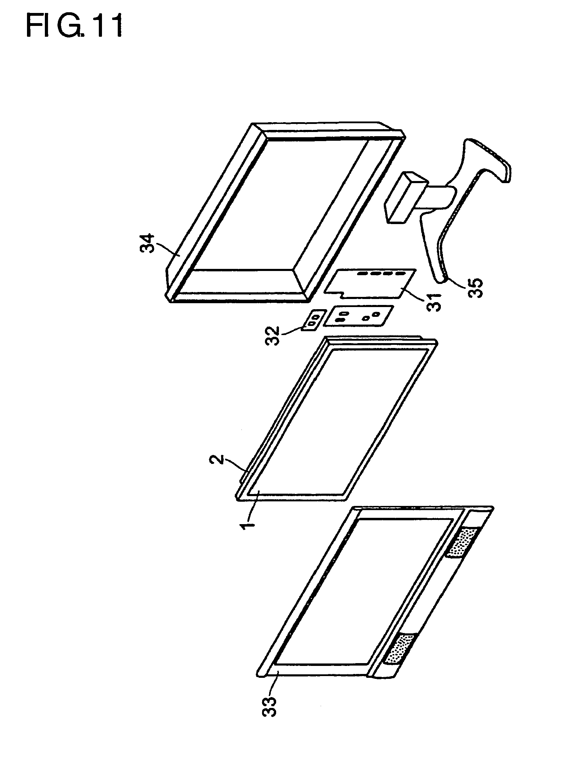

Here, a television receiving device incorporating the display device according to the present embodiment has a structure shown in Fig. 11. In other words, the above liquid crystal display panel land the backlight unit 2 are connected to a power supply 31, a tuner 32 and the like, sandwiched between a front cabinet 33 and a rear cabinet 34, and, in this state, held by a stand 35 that is attached to the rear cabinet 34.

In the present embodiment, the above support member 10 is used. According to this, even if the linear body 10a of the support member 10 is slenderized to alleviate the shadow of the linear body 10a being casted onto the diffusion plate 8, each of the pair of end portions of the linear body 10a is attached to the back chassis 5; accordingly, it is possible to alleviate the rigidity of the linear body 10a becoming low. In other words, it is possible to alleviate the shadow of the linear body 10a being casted onto the diffusion plate 8 while alleviating the rigidity of the linear body 10a of the support member 10 becoming low. Because of this, it becomes possible to alleviate, at the same time, both of: the occurrence of uneven brightness caused by the shadow of the linear body 10a of the support member 10 being casted onto the diffusion plate 8; and the occurrence of noise caused by low rigidity of the linear body 10a of the support member 10.

Here, in the present embodiment, the light emitting body (the LED 61 covered by the diffusion lens 63) having an optical directivity shown in Fig. 3 is used as the light source of the light emitting module 6; however, by using the support member 10 whose linear body 10a slender in line diameter is used as the support portion (the portion that actually supports the diffusion plate 8), the shadow of the linear body 10a as the support portion of the support member 10 is hardly casted onto the diffusion plate 8.

Besides, in the present embodiment, as described above, the top portion of the linear body 10a of the support member 10 is rounded and the sectional shape is formed to be circular, whereby the diffusion plate 8 and the linear body 10a of the support member 10 come into point contact with each other, so that it is possible to easily alleviate more the shadow of the linear body 10a being casted onto the diffusion plate 8.

Besides, in the present embodiment, as described above, by disposing the support member 10 such that when viewed from top, the linear body 10a is in parallel with the long direction of the diffusion plate 8, it is possible to increase the rigidity of the linear body 10a of the support member 10 against force that acts from the diffusion plate 8 side.

Besides, in the present embodiment, as described above, by providing each of the pair of end portions of the linear body 10a of the support member 10 with the engagement piece 10b that engages with the bottom portion of the back chassis 5, it is possible to easily attach each of the pair of end portions of the linear body 10a of the support member 10 to the bottom portion of the back chassis 5.

Besides, in the present embodiment, as described above, by making the engagement piece 10b of the support member 10 function as a fastening member for fastening the bottom portion of the back chassis 5 and the mount board 62 to each other, it is possible to reduce the number of the utilized rivets 11.

Besides, in the present embodiment, as described above, by using a highly reflective polycarbonate resin as the constituent material of the linear body 10a of the support member 10, the light from the light emitting module 6 becomes unlikely to be absorbed by the linear body 10a of the support member 10, so that the light entering the diffusion plate 8 increases and the light use efficiency improves.

Here, it is to be understood that the embodiments disclosed this time are examples in all respects and are not limiting. The scope of the present invention is not indicated by the above description of the embodiments but by the claims, further, all modifications within the scope of the claims and the meaning equivalent to the claims are covered.

For example, in the above embodiments, the example is described, in which the illumination device is used as the backlight unit for the liquid crystal display device; however, the present invention is not limited to this, and the illumination device may be disposed in a device other than the liquid crystal display device.

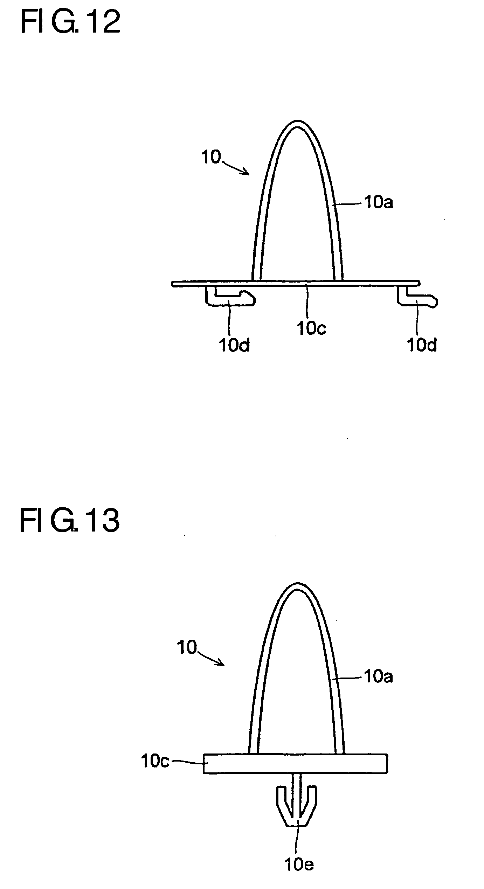

Besides, in the above embodiments, the attachment piece is disposed on each of the pair of end portions of the linear body; however, the present invention is not limited to this, and as shown in Fig. 12 and Fig. 13, both end portions of the linear body 10a may be held by a common base 10c and the attachment piece may be disposed on the base 10c. Besides, the attachment piece may be a substantially L-shaped claw 10d (see Fig. 12) or a protrusion 10e (see Fig. 13) that branches at the tip. Here, the claw 10d and the protrusion 10e are examples of an "attachment piece" of the present invention.

Besides, in the above embodiments, the LED is used as the light source; however, the present invention is not limited to this, and a light emitting body other than the LED may be used as the light source. For example, a cold-cathode tube may be used as the light source.

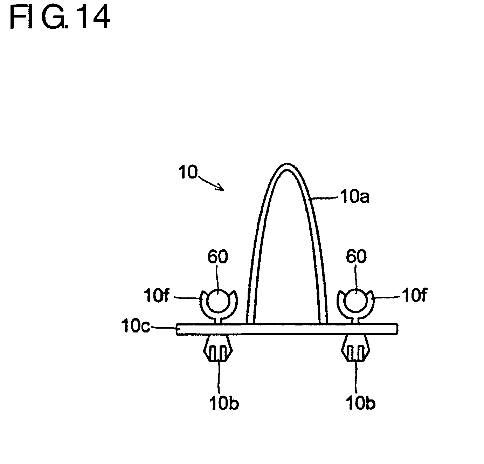

In the case where a cold-cathode tube is sued as the light source, as shown in Fig. 14, the support member 10 may be provided with a grasp portion 10f and a cold-cathode tube 60 may be grasped (held) by the grasp portion 10f.

### Reference Signs List

- 1: liquid crystal display panel (display panel)
- 2: backlight unit (illumination device)
- 5: back chassis (housing member)
- 6: light emitting module
- 8: diffusion plate (optical member)
- 10: support member
- 10a: linear body
- 10b: engagement piece (attachment piece)
- 1O: claw (attachment piece)
- 10e: protrusion (attachment piece)
- 61: LED (light emitting element)
- 62: mount board

## Claims

1. An illumination device comprising:
a light emitting module;
a hosing member in which the light emitting module is housed;
an optical member that is disposed to cover the light emitting module and diffuses light emitted from the light emitting module; and
a support member that is disposed in the housing member and supports the optical member from the light emitting module side;
wherein the support member includes a linear body that has a pair of end portions and is formed to protrude toward the optical member when disposed in the housing member; and
each of the pair of end portions of the linear body is attached to the housing member, and a top portion of the linear body facing the optical member supports the optical member.

2. The illumination device according to claim 1, wherein
the top portion of the linear body facing the optical member supports the optical member at one point.

3. The illumination device according to claim 1 or 2, wherein
the top portion of the linear body facing the optical member is rounded.

4. The illumination device according to any one of claims 1 to 3, wherein
a shape of the optical member when viewed from top is rectangular; and
when viewed from top, the linear body is parallel to a longitudinal direction of the optical member.

5. The illumination device according to any one of claims 1 to 4, wherein
an attachment piece attachable to the hosing member is disposed on the support member; and
the attachment piece is disposed on the pair of end portions of the linear body.

6. The illumination device according to claim 5, wherein
the light emitting module includes a light emitting element and a mount board on which the light emitting element is mounted, and the mount board is fastened to the housing member by a fastening member to be housed in the housing member; and
the attachment piece has also a function of the fastening member, and at least a portion of the fastening of the mount board to the housing member is performed by using the attachment piece.

7. The illumination device according to any one of claims 1 to 6, wherein
the linear body is composed of a material capable of reflecting light.

8. The illumination device according to claim 7, wherein
the material capable of reflecting light is a resin that contains a highly reflective material.

9. A display device comprising:
the illumination device according to any one of claims 1 to 8; and
a display panel that is illuminated by the illumination device.

10. A television receiving device comprising the display device according to claim 9.
